# EUROPÄISCHE PATENTSCHRIFT

(11) **EP 1 767 572 B1**
(45) Veröffentlichungstag und Bekanntmachung des Hinweises auf die Patenterteilung: **30.12.2009**
(21) Anmeldenummer: 06018734.1
(22) Anmeldetag: 07.09.2006
(51) Int. Cl.: C08K 5/00, C08K 5/29

(54) **Hydrolysestabilisatorformulierungen**
Formulations comprising stabilizers against hydrolysis
Formulation contenant des stabilisateurs à l'hydrolyse

(30) Priorität: 21.09.2005 DE 102005045068
(43) Veröffentlichungstag der Anmeldung: 28.03.2007
(73) Patentinhaber: Raschig GmbH, 67061 Ludwigshafen (DE)
(72) Erfinder: Denzinger, Steffen, 55128 Mainz (DE); Lämmerzahl, Frank, 69123 Heidelberg (DE); Zimmer, Harald, 67591 Mörstadt (DE); Schmitt, Alexander, 67127 Rödersheim-Gronau (DE)
(74) Vertreter: Wagner, Jutta

(56) Entgegenhaltungen:
- EP-A- 1 193 050
- EP-A- 1 514 897
- EP-A1- 0 503 421
- EP-A1- 0 792 908
- EP-A1- 1 466 946
- WO-A-92/19655
- WO-A-03/010370
- DE-A1- 19 754 418
- US-A- 4 952 621

## Beschreibung

Gegenstand der vorliegenden Erfindung sind extrudierte Formkörper als Stabilisatoren für Kunststoffe mit hydrolysierbaren Gruppen und ein entsprechendes Verfahren, das die extrudierten Formkörper zur Stabilisierung der von Polymere mit hydrolysierbaren Gruppen einsetzt.

Die Verwendung von aliphatischen, aromatischen oder cycloaliphatischen Mono-, Bis- oder Polycarbodiimiden zur Stabilisierung von Kunststoffen insbesondere von solchen auf Polyesterbasis ist bekannt. Beispielhaft sei auf die Patente und Patentanmeldungen EP 503 421 B1, CH 621 135, US 3,193,522, EP 473 633, DE 1 285 747 und EP 567 884 verwiesen.

Bisher wurden diese Substanzen entweder als Pulver bzw. Schmelze oder aber als sogenannte Masterbatche eingesetzt. Pulver oder Schmelzen bereiten bei der Dosierung und Verteilung im Polymer Schwierigkeiten. Als Masterbatche bezeicnet man konzentrierte Stammansätze einer Substanz in dem Polymer, für das die Substanz verwendet werden soll. Masterbatche verhalten sich hinsichtlich der Dosierung und Verteilung optimal, da sie in derselben Granulatform und -größe wie das Polymer vorliegen. Allerdings sollten Masterbatche mit demselben Polymer gefertigt werden, zu dessen Stabilisierung sie bestimmt sind. Hierdurch ist einerseits eine Anfertigung für den Einzelfall notwendig und andererseits ist das Polymermaterial, welches zur Herstellung des Masterbatches verwendet wird, bereits längere Zeit höheren Temperaturen ausgesetzt. Durch diese thermische Belastung findet bereits ein Abbau statt, der sich am deutlichsten in einer Verfärbung des Granulats des Masterbatch zeigt.

In der JP 2004124010 wird zur Überwindung der genannten Probleme vorgeschlagen, den Hydrolysestabilisator zusammen mit einem thermoplastischen Polymer zu Tabletten zu verpressen. Diese Tabletten enthalten jedoch einerseits ebenso wie der Masterbatch ein Polymer und weisen andererseits ebenso wie Pulver oder Schmelzen eine andere Raumstruktur auf, als das Polymergranulat. Sie zeigen daher auch die damit verbundenen Probleme der Verteilung im Polymer.

Die nachfolgend genannten Schriften aus dem Stand der Technik nennen eine Vielzahl von Polymerverbindungen, die Carbodiimid enthalten, darunter jedoch kein Carbodiimid-Extrudat, das geeignet wäre, als Stabilisator von Polymeren zu dienen.

So beschreibt die EP-A-1514897 einen Stabilisator gegen Hydrolyse für ein Estergruppen enthaltendes Harz und eine thermoplastische Harz-Zusammensetzung beschrieben. Es handelt sich bei dem Stabilisator um eine Zusammensetzung, die eine Carbodiimidzusammensetzung enthält. Selbige umfasst eine Carbodiimidkomponente die mit einem Phosphorantioxidans versetzt wird. Das Carbodiimid liegt in flüssiger Form vor, so dass das Phosphorantioxidans darin gelöst werden kann.

Sodann ist aus der EP 1 466 946 A1 eine flammhemmende Harz-Zusammensetzung bekannt, wobei die Eigenschaft des Flammhemmens erreicht wird, in dem ein thermoplastisches Harz mit einem spezifischen halogenfreien Flammhemmer und einem Hilfsstabilisator versetzt wird. Bei den flammhemmenden Hilfsstoffen handelt es sich um solche aus der Gruppe der Stickstoff enthaltenden Komponenten und einem Metallsalz einer anorganischen Säure.

In der WO 03/010370 A1 werden stabilisierte Polyesterzusammensetzungen und Monofasern hiervon zur Verwendung in Papiermaschinentuch und anderen industriellen Geweben beschrieben. Bei dem hinzu gegebenen Stabilisator kann es sich alternativ um ein monomeres oder um ein polymeres Carbodiimid handeln, wobei ausgeschlossen ist, dass explizit eine Komposition von beidem zugesetzt wird; bei der offenbarten Anwendung, bei der es sich um die Bildung von Textilstrukturen handelt, werden Stabilisatoren nicht als Granulate beigegeben.

In der EP 1 193 050 A1 wird eine hydrolysebeständig ausgerüstete transparente biaxial orientierte Folie aus einem kristallisierbaren Thermoplast offenbart. Bei den Thermoplasten handelt es sich um einen Polyester, der mit einem Hydrolysestabilisator versetzt ist. Hierbei handelt es sich um eine phenolische Verbindung, ein Oxazolin oder ein monomeres oder ein polymeres Carbodiimid, das mit einem organischen Phosphit kombiniert sein kann. Der Hydrolysestabilisator liegt als Masterbatch vor.

Die deutsche Offenlegungsschrift DE 197 54 418 A1 bezieht sich auf stabilisierte Formmassen aus biologisch abbaubaren Materialien. Diese sind gegen hydrolytischen und mikrobiellen Abbau stabilisiert, wobei als Hydrolysestabilisator Polymere oder polymergebundene Carbodiimide verwendet werden.

Ferner wird in der EP 0 792 908 A1 von einer flüssigen Beschichtungszusammensetzung berichtet. Diese Zusammensetzung zeichnet sich durch ihre Viskosität aus; sie beschreibt keine Stabilisatorextrudate, vielmehr werden alle Komponenten, auch die Stabilisatoren flüssig und insbesondere in Form einer Emulsion zugegeben.

In der WO 92/19655 wird schließlich eine Beschichtungszusammensetzung offenbart, die unter Umgebungstemperaturen aushärtbar ist.

Schließlich wird in der US 4,952,621 ein Urethanabdichtmittel oder eine Beschichtungsmischung mit verbesserter Lagerstabilität offenbart. Es handelt sich hierbei explizit um Polyurethanabdichtmittel, die mit einer definierten Viskosität gelagert werden sollen. Die in der erfindungsgemäßen Abdichtmasse enthaltenen Stabilisatoren liegen insofern ebenfalls flüssig vor.

Abschließend berichtet die EP 0 503 421 A1 von mit Carbodiimiden modifizierten Polyesterfasern, die verschlossene Carboxylendgruppen deswegen aufweisen, da sie mit Carbodiimiden umgesetzt worden sind.

Es besteht daher weiterhin Bedarf nach einer geeigneten Formulierung für Carbodiimid-Stabilisatoren.

Überraschend wurde nun gefunden, dass sich Mischungen aus Carbodiimiden und polymeren Carbodiimiden zu Granulaten extrudieren lassen, was mit den Einzelsubstanzen nicht möglich ist.

Die obige Aufgabe wird daher gelöst durch extrudierte Formkörper, bestehend aus mindestens einem monomeren Carbodiimid und mindestens einem polymeren Carbodiimid, wobei die extrudierten Formkörper in Form und Abmessungen denjenigen des Polymergranulats, welches stabilisiert werden soll, entsprechen. Die erfindungsgemäßen Formkörper enthalten keine thermoplastischen Polymermaterialien oder andere Bindemittel.

Entsprechend bezieht sich ein erfindungsgemäßes Verfahren zur Stabilisierung von Polymeren mit hydrolysierbaren Gruppen mit Carbodiimiden darauf, dass das Gemisch aus dem mindestens einen Carbodiimid und dem mindestens einen polymeren Carbodiimid zu Formkörpern extrudiert wird, wobei die extrudierten Formkörper in Form und Abmessungen denjenigen des Polymergranulats, welches stabilisiert werden soll, entsprechen und die extrudierten Formkörper mit dem Polymer vermischt werden, wobei die Formkörper frei von thermoplastischen Polymer materialien und Bindemitteln sind.

In einer bevorzugten Ausführungsform ist nur eine Mischung aus Carbodiimid und Polycarbodiimid enthalten.

In einer weiteren bevorzugten Ausführungsform sind weitere Additive zugesetzt, wie z.B. Antioxidantien, Licht- und UV-Stabilisatoren, Mattierungsmittel, Zusätze zur Verbesserung der Anfärbbarkeit oder zur Verminderung der elektrostatischen Aufladung, Flammschutzmittel, sowie organische oder anorganische Farbstoffe oder Mischungen von zwei oder mehreren der genannten Additive. Insbesondere bevorzugt sind Formulierungen, die Antioxidantien und/oder Licht- bzw. UV-Stabilisatoren neben den monomeren Carbodiimiden und Polycarbodiimiden enthalten.

Die Vorteile der erfindungsgemäßen Formulierungen liegen darin, dass eine sehr gute Homogenisierung im Polymer möglich ist. Hierbei lässt sich der granulierte Stabilisator in fester Form in dem Polymergranulat dauerhaft homogen verteilen, ohne dass eine thermische Belastung stattfindet. Die Verweilzeit des Polymer im Extruder bis zur Homogenisierung des Stabilisators ist viel kürzer. Bei gleicher Verweilzeit wird eine bessere Homogenisierung erzielt, der Stabilisator ist von Beginn an besser verteilt und kann so auch die gesamte Masse von Beginn an schützen. Bei Pulvern oder auch Tabletten findet häufig trotz einer zunächst homogenen Mischung der Feststoffe bereits beim Transport zum Extruder eine Entmischung statt. Somit kann der Stabilisator zu Beginn nicht gleichmäßig genug vor dem thermischen Abbau schützen.

Die erfindungsgemäßen Formkörper eignen sich als Stabilisatoren für Kunststoffe mit hydrolisierbaren Gruppen, insbesondere Polymere auf Polyesterbasis. Hierzu zählen unter anderem Polykondensationsprodukte wie Polyester, Polyamide, Polycaprolactone, Polyesteramide, Polyimide, Polyamidimide, Polyetherimide und Polyetherester, als auch Polyadditionsprodukte wie Polyurethane, Polyharnstoffe und Polyharnstoff/Polyurethan-Elastomere, sowie radikalisch hergestellte Polymere wie Polyvinylacetat und native Polymere wie Cellulose, Cellulosederivate und Stärke.

Besonders bewähren sich die erfindungsgemäßen Formulierungen bei aliphatisch /aromatischen Polyestern wie z.B. Polyethylenterephthalaten oder Polybutylenterephthalaten, aber auch bei vollständig aromatischen und beispielsweise bei halogenierten Polyestern. Bausteine von Polyestern sind vorzugsweise Diole und Dicarbonsäuren, bzw. entsprechend aufgebaute Oxycarbonsäuren. Hauptsäurebestandteil der Polyester ist die Terephthalsäure, geeignet sind natürlich auch andere vorzugsweise para- oder trans-ständige Verbindungen wie z.B. 2,6-Naphthalindicarbonsäure aber auch p-Hydroxybenzoesäure zu nennen. Weiterhin können auch aromatische m-ständige Disäuren wie Isophthalsäure als Comonomere in den Polyester eingebaut werden. Typische geeignete zweiwertige Alkohole wären beispielsweise Ethylenglykol, Propandiol, 1,4-Butandiol aber auch Hydrochinon usw. Bevorzugte aliphatische Diole haben zwei bis vier C-Atome. Besonders bevorzugt ist Ethylenglykol.

Die Konzentration an Stabilisator im Polymer liegt vorzugsweise im Bereich von 0,05 bis 5 Gew.-%, bevorzugt 0,1 bis 1,0 Gew.-%, insbesondere 0,3 bis 0,8 Gew.-%.

Als Stabilisatoren werden die an sich bekannten monomeren und polymeren Carbodiimide der Formel

R-[-N=C=N-R-]ₙ-N=C=N-R

verwendet, in der R für gleiche oder verschiedene optional substituierte Alkyl-, Cycloalkyl- oder Arylgruppen steht und wobei für Carbodiimide n = 0 und für Polycarbodiimde n ≥ 2, vorzugsweise im Bereich von 10 bis 100 liegt. Vorzugsweise handelt es sich um substituierte Arylcarbodiimide, insbesondere um mit Alkylgruppen substituierte.

Als Carbodiimide eignen sich demgemäss Bis-aryl-, -alkyl- und -cycloalkyl-carbodiimide, vorzugsweise Bisarylcarbodiimide. Die Arylkerne können hierbei unsubstituiert sein, vorzugsweise werden jedoch in 2- oder in 2,6-Stellung substituierte und damit sterisch gehinderte Carbodiimide eingesetzt. Besonders bevorzugt sind mit Isopropylgruppen substituierte aromatische Carbodiimide.

Als Polycarbodiimide sind erfindungsgemäß vorzugsweise Verbindungen geeignet, bei denen die Carbodiimideinheiten über ein-, zwei- oder dreifach substituierte Arylkerne miteinander verbunden sind, wobei als Arylkerne Phenylen, Naphthylen, Diphenylen und der vom Diphenylmethan abgeleitete zweiwertige Rest in Betracht kommen und die Substituenten nach Art und Substitutionsort den Substituenten der im Arylkern substituierten Carbodiimiden entsprechen. Ein besonders bevorzugtes Polycarbodiimid ist das handelsübliche aromatische Polycarbodiimid, das in o-Stellung zu den Carbodiimidgruppen, d.h. in 2,6- oder 2,4,6-Stellung am Benzolkern mit Isopropylgruppen substituiert ist. Die Polycarbodiimide haben vorzugsweise ein mittleres Molekulargewicht (bestimmt mittels GPC in Tetrahydrofuran) von 2000 bis 25 000, insbesondere jedoch von 5000 bis 15 000.

Das Verhältnis zwischen monomerem Carbodiimid und Polycarbodiimid in den erfindungsgemäßen Formulierungen beträgt vorzugsweise 5:95 bis 95:5, bevorzugt 10:90 bis 90:10 und insbesondere 40:60 bis 60:40.

Weitere Additive können sein: Antioxidantien, insbesondere aus der Gruppe der sterisch gehinderten Phenole, z.B. die Irganox-Typen von Ciba Spezialitätenchemie AG oder die Ralox-Typen von Raschig GmbH; thermische Stabilisatoren auf P-Basis wie z.B. die Irgafos-Typen von Ciba Spezialitätenchemie AG; und Lichtschutzadditive, insbesondere Stabilisatoren auf Basis sterisch gehinderter Amine (HALS) wie z.B. die Tinuvin-Typen von Ciba Spezialitätenchemie AG.

Typische Addititve für Polyamide sind Kupfer-lodid-Systeme als anorganische Antioxidantien und Lichtstabilisatoren, sterisch gehinderte Phenole und Phosphite als organische Antioxidantien und Lichtstabilisatoren sowie aromatische Amine als Antioxidantien und Lichtstabilisatoren.

Typische Additive für Polyester sind Antioxidantien wie Irganox 245 und Irganox 1010 von Ciba Spezialitätenchemie AG, Lichtstabilisatoren wie Tinuvin 234, Tinuvin 1577 und Irgafos 168 von Ciba Spezialitätenchemie AG.

Sofern ein oder mehrere weitere Additive enthalten sind, beträgt ihr Mengenanteil jeweils von 1 bis 60 Gew.-%, bevorzugt von 5 bis 30 Gew.-%.

Die Abmessungen der erfindungsgemäßen Formkörper entsprechen vorzugsweise denjenigen der Granulate des Polymers, welches stabilisiert werden soll. Dies gewährleistet eine effiziente und homogene Mischung mit den Polymermaterialien und stellt sicher, dass keine Entmischung stattfindet. Typischerweise handelt es sich daher bei den erfindungsgemäßen Formkörpern um zylindrische Granulate mit einem Durchmesser im Bereich von 0,5 bis 5 mm, vorzugsweise 1 bis 2 mm und einer Höhe im Bereich von 1 mm bis 1 cm, vorzugsweise 2 bis 5 mm. Eine weitere typische Form sind ellipsoide Chips mit einem Durchmesser von 3 mm bis 1 cm, vorzugsweise 3 bis 6 mm und einer Höhe an der stärksten Stelle von 2 bis 5 mm.

Zur Herstellung werden die vorgesehenen Bestandteile in Pulverform bzw. in flüssiger und Pulverform zunächst mechanisch möglichst homogen gemischt. Anschließend wird die Mischung über einen Extruder zu Formkörpern verarbeitet.

Die Additive werden hierzu bevorzugt in einem bekannten Pulvermischer, z.B. einem Kreuzstrompulvermischer oder einem Wurfschaufelmischer homogen gemischt. Die pulvrige Mischung wird einer Granuliervorrichtung zugeführt. Diese besteht beispielsweise aus einem Granulierzylinder, der Durchgangsbohrungen mit einem Durchmesser von 1,5 bis 5 mm aufweist, vorzugsweise 2 bis 3 mm und einem gegenläufigen, gekühlten Druckzylinder. Die Zuführung der gemischten Stabilisatoren erfolgt z.B. mittels einem über den Zylindern liegenden Aufgabetrichter, durch welchen mittels Schwerkraft die Stabilisatoren in den Bereich der Zylinder gelangen. Die beiden Zylinder sind zweckmäßigerweise etwas geneigt, so daß die Granulate aus dem Granulierzylinder ausgetragen werden. Im Inneren des Granulierzylinders kann ein feststehendes Messer angebracht werden, mit welchem die Stabilisatorgranulate abgetragen und somit auf die gewünschte Länge gerichtet werden.

Die Verarbeitung erfolgt vorzugsweise derart, daß die Stabilisatormischung der Granuliervorrichtung zugeführt und dort unter Druck verfestigt wird. Dabei wird die entstehende verfestigte Masse als Strang durch die Durchgangsbohrungen des Granulierzylinders gedrückt, dort abgetragen und somit zu einem Stranggranulat gerichtet. Die Granulierung erfolgt bevorzugt bei erhöhtem Druck und Temperaturen unterhalb 100°C. Hierdurch ist gewährleistet, daß die Stabilisatoren nicht thermisch belastet werden. Nach dem Abkühlen können die fertigen Granulate in gewünschter Weise weiterverarbeitet werden.

Die folgenden Beispiele sollen die Erfindung veranschaulichen, ohne sie jedoch auf die konkret beschriebenen Ausführungsformen zu beschränken. Alle %-Angaben beziehen sich, soweit nicht anders angegeben, auf das Gewicht.

### Beispiel 1: Herstellung von erfindungsgemäßen Granulaten

Ein Gemisch aus Stabilisator 7000 und Stabilisator 9000 (monomeres Carbodiimid bzw. Polycarbodiimid, Hydrolysestabilisatoren der Raschig GmbH) wird zwischen einem Durchgangsbohrungen aufweisenden, rohrförmigem Granulierzylinder und einem gegenläufigen, gekühlten Druckzylinder bei Temperaturen zwischen 20°C und 80°C verpresst. Dabei stellt sich abhängig von den Mischungsanteilen ein Druck zwischen 2 und 5 MPa ein. Es wird kein zusätzlicher Druck aufgewandt. Die Durchgangsbohrungen wurden so gewählt, dass Granulat mit einem Durchmesser von 2 bis 3 mm erzeugt wird. Für die Granulate wird der Farbwert b* gemäß DIN 5033 mit einem Spektralphotometer CM-3600d der Firma Minolta gemessen. Der Farbwert gibt einen Anhaltspunkt für die Qualität des Stabilisators. Eine der wichtigsten Anwendungen für Polyester ist die Herstellung von Fasern, bei denen es besonders darauf ankommt, dass die Polymere keine Verfärbungen zeigen. Verfärbungen sind ein typisches Zeichen für eine Zersetzung des Polymeren, die im schlimmsten Fall zum Faserbruch führt.

Tabelle 1 gibt eine Übersicht über die hergestellten Granulate und deren Farbwerte.

**Tabelle 1**

| Granulat | Anteil Stab 7000 [%] | Anteil Stab 9000 [%] | Temperatur [°C] | Druck [MPa] | Durchmesser [mm] | b* |
|---|---|---|---|---|---|---|
| A | 10 | 90 | 40 | 4,8 | 3 | 5,4 |
| B | 30 | 70 | 75 | 4,2 | 3 | 5,2 |
| C | 50 | 50 | 60 | 4,2 | 2 | 5,2 |
| D | 68 | 32 | 35 | 3,8 | 2 | 5,0 |
| E | 90 | 10 | 25 | 3,7 | 3 | 4,7 |

Der Versuch Stabilisator 7000 oder Stabilisator 9000 direkt zu extrudieren misslang, das Carbodiimid schmilzt während sich das Polycarbodiimid nicht kompaktieren lässt.

### Beispiel 2. Herstellung von Granulaten mit weiteren Additiven

Es wurden analog zu Beispiel 1 Granulate mit Zusatz weiterer Additive hergestellt, Temperatur 45°C. Tabelle 2 gibt eine Übersicht über die erhaltenen Granulate.

**Tabelle 2**

| Granulat | Anteil Stab 7000 [%] | Anteil Stab 9000 [%] | Weiteres Additiv [%] | Durchmesser [mm] | b* |
|---|---|---|---|---|---|
| F | 10 | 80 | Irganox 1010 (Ciba) 10% | 3 | 5,0 |
| G | 25 | 60 | Irgafos 168 (Ciba) 15% | 3 | 5,8 |
| H | 40 | 35 | Tinuvin 234 (Ciba) 25% | 2 | 5,4 |
| I | 63 | 32 | Ionol 220 (Degussa) 5% | 2 | 6,1 |

### Beispiel 3 (Vergleich) : Herstellung von Masterbatches

Ein Gemisch aus 1 bis 15% eines polymeren Carbodiimids (Stabilisator 9000, Raschig GmbH) und einem feststoffkondensierten, nicht mattierten Polyester wird in einem Zweischneckenextruder ZK25 mit einem Stranggranulator Typ CSG 171/1 der Firma Dr. Collin GmbH bei eine Extrudertemperatur von 280° und einer Schneckendrehzahl von 240 U/min zu den Masterbatchen J - R extrudiert.

Ein Gemisch aus 5 bis 10 % eines polymeren Carbodiimids (Stabilisator 9000 der Fa. Raschig GmbH) und einem Polyamid werden auf einem Zweischneckenextruder ZSK 40 mit einem Stranggranulator der Firma Theyson bei einer Extrudertemperatur von 260°C und einer Schneckendrehzahl von 240 U/min zu den Masterbatchen S und T extrudiert.

Ein Gemisch aus 5 bis 15 % eines polymeren Carbodiimids (Stabilisator 9000 der Fa. Raschig GmbH) und einem thermoplastischen Polyurethan werden auf einem Zweischneckenextruder ZK 25 mit einem Stranggranulator Typ CSG 171/1 der Firma Dr. Collin GmbH bei einer Extrudertemperatur von 200°C und einer Schneckendrehzahl von 100 U/min zu den Masterbatchen U und V extrudiert.

Tabelle 3 gibt eine Übersicht über die hergestellten Masterbatch-Granulate und deren Farbwerte b*.

**Tabelle 3**

| Granulat | Anteil Stab 9000 [%] | Polymertyp | b* |
|---|---|---|---|
| J | 15 | Polyester T86 (Invista Fibers & Resins GmbH) | 12,1 |
| K | 10 | Polyester T86 | 11,4 |
| L | 5 | Polyester T86 | 11,1 |
| M | 12 | Polyester T94 (Invista Fibers & Resins GmbH) | 11,4 |
| N | 1 | Polyester Polyclear 1101 (Invista Resins & Fibers GmbH) | 9,4 |
| O | 15 | Polyester Polyclear 1101 | 10,8 |
| P | 8 | Polyester Voridian CM01 (Eastman Chemicals) | 11,1 |
| Q | 15 | Polyester Lighter C98 (Equipolymers) | 13,6 |
| R | 12 | Polyester PBT Typ 2000 (Invista Resins & Fibers GmbH) | 12,4 |
| S | 5 | Polyamid PA6, Ultramid B36 (BASF AG) | 10,6 |
| T | 10 | Polyamid PA6, Ultramid B36 (BASF AG) | 15,2 |
| U | 5 | TPU Elastollan 685A (BASF AG) | 10.3 |
| V | 15 | TPU Elastollan 685A (BASF AG) | 12,4 |

Man erkennt, dass bereits die Farbwerte der Masterbatch-Granulate deutlich höher liegen als bei den erfindungsgemäßen Granulaten.

### Beispiel 4: Herstellung von Polyesterfasern

Zur Beurteilung der Stabilisatorgranulate werden aus einer Mischung des Polyesters T86 (Invista) und dem Granulat aus Beispiel A, bzw. dem Masterbatch aus Beispiel J Fasern gezogen. Die Dosierung der Additivkomponenten wird so eingestellt, dass jeweils 0,8 % Polycarbodiimid im Endprodukt vorliegen. Die Additivkomponenten werden kontinuierlich gravimetrisch dem Polyester am Eintrag des Extruders homogen beigemischt. Tabelle 4 gibt eine Übersicht über die Produkte und deren Farbwerte.

| Produkt | Polymer | Additiv | Menge Additiv [%] | b* |
|---|---|---|---|---|
| W | T86 | Granulat A | 0,88 | 4,4 |
| X | T86 | Masterbatch F | 5,33 | 5,3 |

Es ist zu erkennen, dass die Verwendung des erfindungsgemäßen Additivgranulats ein Produkt mit günstigerem Gelbwert ergibt.

### Beispiel 5: Vergleich von erfindungsgemäßen Formkörpern mit Tabletten

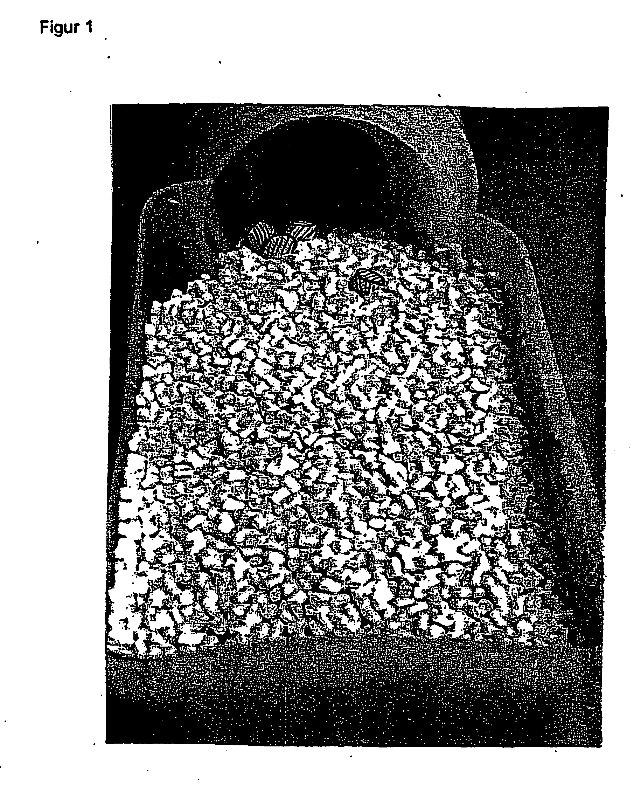

In zwei Weithals-Polyethylen-Flaschen mit 1 l Inhalt wurden jeweils 400 g Polyethylenterephthalt-Granulat (RT 12, Invista Resins & Fibers GmbH) eingefüllt. In eine Flasche wurden 7 Tabletten mit einem Durchmesser von 8 mm und einer Höhe von 4 mm entsprechend 2,3 g gepresstes Polycarbodiimid zugegeben. In die zweite Flasche wurden 2,3 g Granulat entsprechend Beispiel 1, Nr. A zugegeben. Die Einsatzmenge von 2,3 g auf 400 g entspricht 0,5 % Stabilisatoranteil in Polyethylenterephthalat. Der Inhalt beider Flaschen wurde homogenisiert. Anschließend wurden die Flaschen 10 min liegend auf einem Laborschüttler geschüttelt und dann ohne die Position zu verändern aufgeschnitten. Die Figuren 1 bis 4 zeigen das Ergebnis dieser Behandlung.

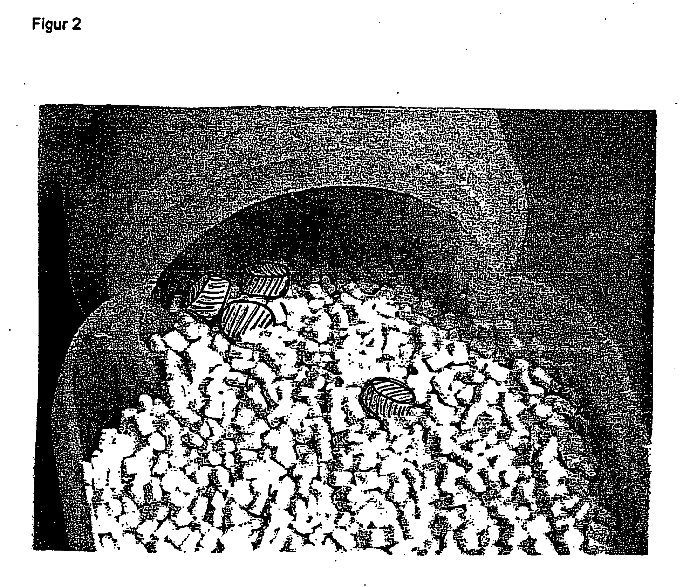

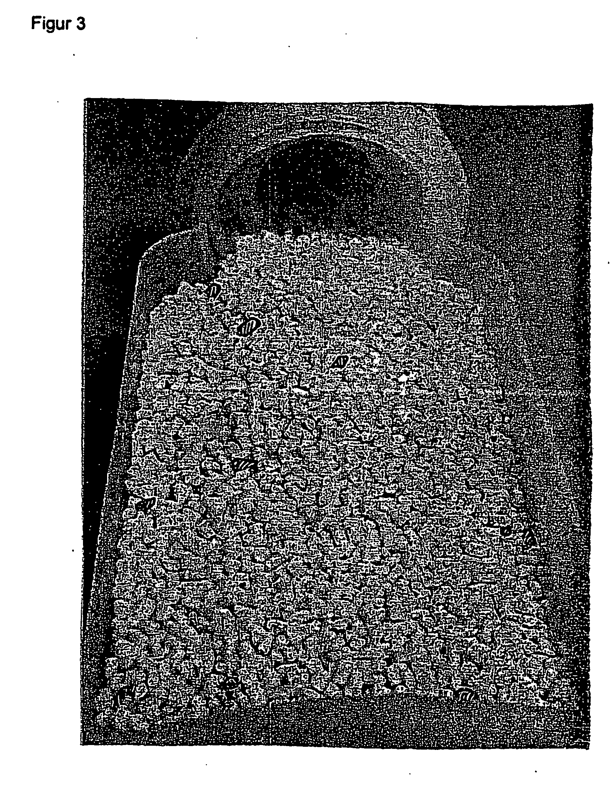

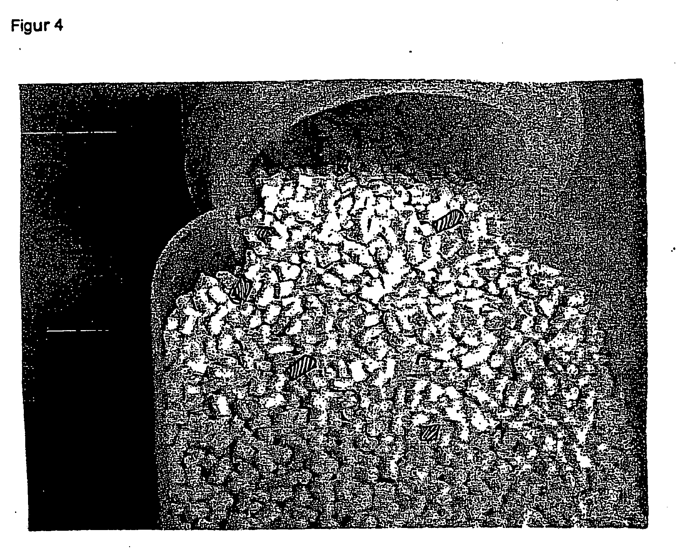

In Figur 1 und 2 ist deutlich zu erkennen, dass sich von den 7 Tabletten in der ersten Flasche vier am Flaschenhals angesammelt haben. Durch die Erschütterungen, welche recht gut die mechanischen Einwirkungen bis zum Aufschmelzen im Extruder wiederspiegeln, hat sich demnach mehr als die Hälfte des zugesetzten Stabilisators von dem Polyester entmischt. In den Figuren 3 und 4, in denen die erfindungsgemäßen Formkörper zur leichteren Erkennung angefärbt wurden, hat dagegen keinerlei Entmischung stattgefunden.

Als Ergebnis ist festzustellen, dass Tabletten im Gegensatz zu extrudierten Formkörpern nicht homogen einmischbar sind. Sie sind schlechter dosierbar, da eine Tablettierung mit abnehmender Größe der Tabletten unwirtschaftlicher und technisch aufwendiger wird. Die erfindungsgemäßen Formkörper lassen sich dagegen über die üblicherweise verwendete Schüttelrinne exakt und homogen zudosieren. Auch eine Vormischung kann verwendet werden, da diese einfach auf mechanischem Wege herstellbar und unbegrenzt stabil ist.

## Patentansprüche

1. Extrudierter Formkörper als Stabilisator für Kunststoffe mit hydrolysierbaren Gruppen, **dadurch gekennzeichnet, dass**
- mindestens ein monomeres Carbodiimid und mindestens ein polymeres Carbodiimid enthalten ist
- der extrudierte Formkörper in Form und Abmessungen denjenigen des Polymergranulats, welches stabilisiert werden soll, entspricht, und
- der Formkörper frei von thermoplastischen Polymermaterialien und frei von Bindemitteln ist.

2. Formkörper gemäß Anspruch 1, **dadurch gekennzeichnet, dass** das Carbodiimid ausgewählt ist unter lsopropylgruppen substituierten aromatischen Carbodiimiden.

3. Formkörper gemäß Anspruch 1 oder 2, **dadurch gekennzeichnet, dass** das polymere Carbodiimid ausgewählt ist unter aromatischen Polycarbodiimiden, die in 2,6- oder 2,4,6-Stellung am Benzolkern mit Isopropylgruppen substituiert sind und vorzugsweise ein mittleres Molekulargewicht von 2000 bis 25 000 g/mol, insbesondere jedoch von 5000 bis 15 000 g/mol haben.

4. Formkörper gemäß einem der Ansprüche 1 bis 3, **dadurch gekennzeichnet, dass** das Verhältnis von Carbodiimid(en) zu polymerem/polymeren Carbodiimid(en) 5:95 bis 95:5 beträgt.

5. Formkörper gemäß einem der Ansprüche 1 bis 4, **dadurch gekennzeichnet, dass** er aus mindestens einem Carbodiimid und mindestens einem polymeren Carbodiimid besteht.

6. Formkörper gemäß einem der Ansprüche 1 bis 4, **dadurch gekennzeichnet, dass** ein oder mehrere weitere übliche Kunststoffadditive, ausgewählt unter Antioxidantien, UV-Stabilisatoren, Mattierungsmitteln, Zusätzen zur Verbesserung der Anfärbbarkeit oder zur Verminderung der elektrostatischen Aufladung, Flammschutzmitteln, sowie organischen oder anorganischen Farbstoffen, enthalten sind.

7. Formkörper gemäß einem der Ansprüche 1 bis 6, **dadurch gekennzeichnet, dass** es zylindrische Granulate mit einem Durchmesser im Bereich von 0,5 bis 5 mm, vorzugsweise 1 bis 2 mm und einer Höhe im Bereich von 1 mm bis 1 cm, vorzugsweise 2 bis 5 mm sind.

8. Formkörper gemäß einem der Ansprüche 1 bis 6, **dadurch gekennzeichnet, dass** es ellipsoide Chips mit einem Durchmesser von 3 mm bis 1 cm, vorzugsweise 3 bis 6 mm und einer Höhe an der stärksten Stelle von 2 bis 5 mm sind.

9. Verfahren zur Stabilisierung von Polymeren mit hydrolysierbaren Gruppen mit Carbodiimiden, **dadurch gekennzeichnet, dass** ein Gemisch aus mindestens einem Carbodiimid und mindestens einem polymeren Carbodiimid zu Formkörpern extrudiert wird, wobei die extrudierten Formkörper in Form und Abmessungen denjenigen des Polymergranulats, welches stabilisiert werden soll, entsprechen und die extrudierten Formkörper mit dem Polymer vermischt werden, wobei die Formkörper frei von thermoplastischen Polymermaterialien und Bindemitteln sind.

10. Verfahren gemäß Anspruch 9, **dadurch gekennzeichnet, dass** die Formkörper mittels einer Schüttelrinne direkt vor der Einführung des Polymers in einen Extruder mit dem Polymer vermischt werden.

11. Verfahren gemäß Anspruch 9, **dadurch gekennzeichnet, dass** die Formkörper in einer Mischvorrichtung mit dem Polymer vermischt werden und die Vormischung bis zur Verarbeitung gelagert wird.

12. Verfahren gemäß einem der Ansprüche 9 bis 11, **dadurch gekennzeichnet, dass** das Polymer ausgewählt ist unter Polyestern, Polyurethanen, Polyamiden und Polyamidimiden.

13. Verfahren gemäß Anspruch 12, **dadurch gekennzeichnet, dass** das Polymer ausgewählt ist unter aliphatisch/aromatischen Polyestern, insbesondere unter Polyethylenterephthalat und Polybutylenterephthalat.

## Claims

1. Extruded formed body as stabilizer for polymers with hydrolysable groups,
**characterized in that**
- at least one monomeric carbodiimide and at least one polymeric carbodiimide is comprised,
- the extruded formed body corresponds in to form and size to that of the polymer granulate which is to be stabilized, and
- the formed body is free of thermoplastic polymer materials and free of bonding agents.

2. Formed body according to claim 1, **characterized in that** the carbodiimide is chosen from aromatic carbodiimides substituted with isopropyl groups.

3. Formed body according to claim 1 or 2, **characterized in that** the polymeric carbodiimide is chosen from aromatic polycarbodiimides substituted with isopropyl groups in the 2,6- or 2,4,6-position on the benzene nucleus and having preferably a mean molecular weight of 2,000 to 25,000 g/mol, particularly from 5,000 to 15,000 g/mol.

4. Formed body according to one of claims 1 to 3, **characterized in that** the ratio of carbodiimide(s) to polymeric carbodiimide(s) is from 5:95 to 95:5.

5. Formed body according to one of claims 1 to 4, **characterized in that** it consists of at least one carbodiimide and of at least one polymeric carbodiimide.

6. Formed body according to one of claims 1 to 4, **characterized in that** one or more additional plastic additive(s) is/are comprised, chosen from antioxidants, UV stabilizers, matting agents, additives for improving stainability or for reducing electrostatic charges, flame retardants and organic or inorganic dyes.

7. Formed body according to one of claims 1 to 6, **characterized in that** the formed bodies are cylindrical granulates with a diameter ranging from 0.5 to 5 mm, preferably 1 to 2 mm and a height ranging from 1 mm to 1 cm, preferably 2 to 5 mm.

8. Formed body according to one of claims 1 to 6, **characterized in that** the formed bodies are ellipsoidal chips with a diameter of 3 mm to 1 cm, preferably 3 to 6 mm and a height of 2 to 5 mm at the thickest point.

9. Method for stabilizing polymers with hydrolysable groups by carbodiimides, **characterized in that** a mixture of at least one carbodiimide and at least one polymeric carbodiimide is extruded, building formed bodies, wherein said extruded formed bodies correspond in form and size to that of the polymer granulate which is to be stabilized, and the extruded formed bodies are mixed with the polymer, the formed bodies being free of thermoplastic polymer materials and free of bonding agents.

10. Method according to claim 9, **characterized in that** the formed bodies were mixed by means of a rocking channel with the polymer directly before introduction of the polymer in an extruder.

11. Method according to claim 9, **characterized in that** the formed bodies were mixed with the polymer by means of a mixing device and the premix is stored until using up.

12. Method according to one of claims 9 to 11, **characterized in that** the polymer is chosen from polyesters, polyurethanes, polyamides and polyamidimides.

13. Method according to claim 13, **characterized in that** the polymer is chosen from aliphatic/aromatic polyesters, in particular from polyethylene terephthalate or polybutylene terephthalate.

## Revendications

1. Corps façonné extrudé comme stabilisateur pour des matériaux synthétiques avec des groupes hydrolysables, **caractérisé en ce que**
- au moins un carbodiimide monomère et au moins un carbodiimide polymère sont contenus
- le corps façonné extrudé correspond, par la forme et les dimensions, à celles du granulat polymère qui doit être stabilisé, et
- le corps façonné est exempt de matériaux polymères thermoplastiques et exempt de liants.

2. Corps façonné selon la revendication 1, **caractérisé en ce que** le carbodiimide est choisi parmi les carbodiimides aromatiques substitués par des groupes isopropyle.

3. Corps façonné selon la revendication 1 ou 2, **caractérisé en ce que** le carbodiimide polymère est choisi parmi les polycarbodiimides aromatiques, qui sont substitués en position 2,6 ou 2,4,6 sur le cycle benzène par des groupes isopropyle et qui présentent de préférence un poids moléculaire moyen de 2000 à 25 000 g/mole, en particulier cependant de 5000 à 15 000 g/mole.

4. Corps façonné selon l'une quelconque des revendications 1 à 3, **caractérisé en ce que** le rapport de carbodiimide(s) à carbodiimide(s) polymère(s) est de 5:95 à 95:5.

5. Corps façonné selon l'une quelconque des revendications 1 à 4, **caractérisé en ce qu'**il est constitué par au moins un carbodiimide et au moins un carbodiimide polymère.

6. Corps façonné selon l'une quelconque des revendications 1 à 4, **caractérisé en ce qu'**un ou plusieurs autres additifs usuels pour matériaux synthétiques, choisis parmi les antioxydants, les stabilisateurs des UV, les agents de matage, les additifs pour l'amélioration de l'aptitude à la teinture ou pour éviter la charge électrostatique, les agents retardateurs de flammes ainsi que les colorants organiques ou inorganiques sont contenus.

7. Corps façonné selon l'une quelconque des revendications 1 à 6, **caractérisé en ce qu'**il s'agit de granulats cylindriques présentant un diamètre dans la plage de 0,5 à 5 mm, de préférence de 1 à 2 mm et une hauteur dans la plage de 1 mm à 1 cm, de préférence de 2 à 5 mm.

8. Corps façonné selon l'une quelconque des revendications 1 à 6, **caractérisé en ce qu'**il s'agit de copeaux ("chips") ellipsoïdes présentant un diamètre de 3 mm à 1 cm, de préférence de 3 à 6 mm et une hauteur en l'endroit le plus épais de 2 à 5 mm.

9. Procédé pour la stabilisation de polymères avec des groupes hydrolysables par des carbodiimides, **caractérisé en ce qu'**on extrude un mélange d'au moins un carbodiimide et d'au moins un carbodiimide polymère en corps façonnés, les corps façonnés extrudés correspondant, par la forme et les dimensions, à celles du granulat polymère qui doit être stabilisé et les corps façonnés extrudés sont mélangés avec le polymère, les corps façonnés étant exempts de matériaux polymères thermoplastiques et de liants.

10. Procédé selon la revendication 9, **caractérisé en ce que** les corps façonnés sont mélangés avec le polymère au moyen d'un chenal vibrant directement avant l'introduction du polymère dans une extrudeuse.

11. Procédé selon la revendication 9, **caractérisé en ce que** les corps façonnés sont mélangés avec le polymère dans un dispositif de mélange et le prémélange est entreposé jusqu'à la transformation.

12. Procédé selon l'une quelconque des revendications 9 à 11, **caractérisé en ce que** le polymère est choisi parmi les polyesters, les polyuréthanes, les polyamides et les polyamidimides.

13. Procédé selon la revendication 12, **caractérisé en ce que** le polymère est choisi parmi les polyesters aliphatiques/aromatiques, en particulier parmi le poly(téréphtalate d'éthylène) et le poly(téréphtalate de butylène).
